# EUROPEAN PATENT SPECIFICATION

(11) **EP 1 227 139 B1**
(45) Date of publication and mention of the grant of the patent: **05.04.2006**
(21) Application number: 01101538.5
(22) Date of filing: 24.01.2001
(51) Int. Cl.: C09K 11/62, C01B 13/36

(54) **Method of producing crystalline phosphor powders at low temperature**
Verfahren zur Herstellung von kristallinem Phosphorpulver bei niedriger Temperatur
Procédé de préparation de poudres de cristaux de phosphore à la température basse

(43) Date of publication of application: 31.07.2002
(73) Proprietor: Tas, Ahmet Cüneyt, Prof. Dr., Central, SC 29639 (US)
(72) Inventor: Tas, Ahmet Cüneyt, Prof. Dr., Central, SC 29639 (US)
(74) Representative: Dey, Michael

(56) References cited:
- EP-A- 0 408 258
- WO-A-91/13831
- DE-C- 19 639 353
- US-A- 4 895 832
- HOKAZONO S ET AL: "The sintering behaviour of spinel powders produced by a homogeneous precipitation technique" BRITISH CERAMIC TRANSACTIONS AND JOURNAL, MAY-JUNE 1992, UK, vol. 91, no. 3, pages 77-79, XP002169832 ISSN: 0307-7357
- DATABASE CHEMABS [Online] CHEMICAL ABSTRACTS SERVICE, COLUMBUS, OHIO, US; OOTAKI, HIROMICHI ET AL: "Manufacture of perovskite oxide powders" retrieved from STN Database accession no. 110:41415 CA XP002170512 & JP 63 222014 A (NIHON CEMENT CO., LTD., JAPAN) 14 September 1988 (1988-09-14)
- HSU K -H ET AL: "Photoluminescence of ZnGa2O4 phosphor prepared by a microencapsulation method" CERAMICS INTERNATIONAL,ELSEVIER APPLIED SCIENCE PUBL, BARKING, ESSEX,GB, vol. 26, no. 5, 16 June 2000 (2000-06-16), pages 469-473, XP004209793 ISSN: 0272-8842

## Description

The present invention relates to a method for producing ZnGa₂O₄ ceramic powders and, in particular, to the area of luminescent phosphor ceramics developed e.g. for use in a vacuum fluorescent display or a field emission display, and a chemical method for the synthesis of a ceramic phosphor material.

Vacuum fluorescent displays (VFDs) are well known as emissive, digital display modules, operating at low voltage. Major drawbacks of VFD are the lack of color and matrix addressability. As a result, the conventional cathode ray tube (CRT) still continues to function as the emissive display of choice. However, the CRT needs to be operated at high voltages and is not flat. Recently, the field emission display (FED) has been developed as a flat panel vacuum emissive display device. The goal of manufacturing a low voltage FED basically relies on the development of highly efficient low voltage phosphor materials.

The phenomenon of electroluminescence (EL) [1] can be described as the non-thermal conversion of electrical energy into luminous energy. In EL devices, light is generated by impact excitation of a light emitting center present in the material by high energy electrons, which gain their high energy from an electric field. In general, phosphors, whether being used for EL or cathode ray tubes (CRTs), consist of a host material doped with, e.g., Mn atoms for the light emission centers. To be a phosphor host lattice, a material must satisfy the basic condition of having a band gap large enough to emit visible light without absorption [1]. This narrows the choice of possible materials down to large band gap semiconductors (E_{g}>2.5 eV) and insulators.

Sulphide phosphors have been in widespread use in CRTs and vacuum fluorescent displays (VFDs). However, sulphide-based phosphors release sulphide gases during electron excitation, subsequently causing the cathode filament to deteriorate and the luminance efficiency of phosphors to decrease as well. ZnGa₂O₄ (zinc gallate) powder phosphor has been studied [2] as an alternative of blue cathodoluminescent phosphor of ZnS:Cl phosphor. ZnGa₂O₄, crystallizing in the spinel structure, has a band gap of 4.4 eV, and gives emission from green to red when it is doped with Cr and Mn, and also shows blue emission even in its pristine form [3]. Therefore, ZnGa₂O₄ has been considered [4, 5] as an excellent material for multicolor emitting thin-film EL (TFEL) devices.

The optical [6, 7], electrical [8-11] and structural [12-14] characteristics of ZnGa₂O₄ ceramics have been previously studied in significant depth. The experimental conditions of growing single-crystals of ZnGa₂O₄ have also been documented [15-17]. On the other hand, production of thin films of ZnGa₂O₄ phosphors for TFEL applications was achieved mainly by sol-gel [18], solvent evaporation epitaxy [19], and radio-frequency magnetron sputtering techniques [20-23].

Various dopants have been tested for the purpose of altering the characteristic emission peaks of ZnGa₂O₄ phosphor hosts. The effect of Cd-doping on the photoluminescence (PL) and/or cathodoluminescence (CL) spectra of ZnGa₂O₄ were studied by several researchers [24-26]. It was claimed that the emission color was tunable between 352 and 520 nm in Zn₁₋ₓCdₓGa₂O₄, where x was varied between 0 and 0.6 [24], and with increasing Cd²⁺ the emission and excitation wavelengths of self-activated Zn₁₋ₓCdₓGa₂O₄ were observed [26] to exhibit a red shift. Krebs, *et al.* [27] have studied the crystal chemical aspects of Fe³⁺-doped ZnGa₂O₄ samples by electron paramagnetic resonance (EPR) spectroscopy, and a superposition model analysis has been performed on the same by Bravo, *et al.* [28]. Suh, *et al.* [29] found that the characteristic emission peaks (under UV excitation) of compositions of (1-x) Li_{0.5}Ga_{2.5}O₄-xZnGa₂O₄ shifted from 406 to 440 nm as x increased. On the other hand, Yang, *et al.* [30] concluded that the doping of Li⁺ increased the oxygen vacancy concentration, and therefore enhanced the luminance and conductivity of ZnGa₂O₄ phosphors. The same authors found [30], in contrast with the case of Li⁺, that the doping of Cu²⁺ (by increasing the scattering and trapping probabilities of electrons) decreased the conductivity and luminance of ZnGa₂O₄:Cu phosphors. Few studies related to the determination of the influence of Co²⁺-doping on the luminescence properties ZnGa₂O₄ have also been encountered in the printed literature [31-34]. Most of the earlier studies on the activation of zinc gallate phosphor hosts mainly used the Cr³⁺ dopant [35-38]. Jeong, *et al.* reported [39], in testing the effect of In³⁺-doping, that the photoluminescence of ZnGa₂O₄ host, which peaked at 432± 15 nm, has not decreased nor shifted under the presence of InGaZnO₄ up to a couple of percent in the powder mixture. Finally, Mn ²⁺-doped ZnGa₂O₄ ceramics have been extensively investigated [40-51] as potential low-voltage cathodoluminescence phosphors for high-definition television (HDTV) and vacuum fluorescent displays.

The preferred route of synthesis for pure or doped ZnGa₂O₄ ceramic phosphors has commonly happened to be the solid-state reactive firing (SSRF), of the appropriate amounts of ZnO and Ga₂O₃ (and the dopant oxide) powders, in the majority of the previous work [2-11, 24-53]. Nevertheless, this old technique of ceramic manufacture required temperatures well above 1000°C (for prolonged firing times typically in the vicinity of 24 h) to form the single-phase, spinel phosphor phase [52]. Since the volatilization of Zn at high temperatures (owing to its high vapor pressure) is a serious problem, a robust way of synthesizing ZnGa₂O₄ at lower temperatures is strongly needed.

Jung, *et al.* [54] used an aqueous precipitation method which actually employed the pyhsical wet-mixing (followed by filtering and solid-state high-temperature calcination) of separately formed GaO(OH) and Zn-oxalate precipitates. The resultant powders consisted of a three-phase mixture of ZnO, Ga₂O₃, and ZnGa₂O₄ at 600°C, but the authors claimed that they obtained single-phase ZnGa₂O₄ after 700°C calcination. Hsu, *et al.* [55] added Ga₂O₃ powders into an alcoholic solution stirred at 75°C, containing dissolved zinc nitrate and urea, to coat their surfaces with ZnO after 5 to 15 h of wet-mixing, and the precursors calcined at 1100°C for 5 h still consisted of two-phase mixtures of ZnGa₂O₄, together with small amounts of either ZnO or Ga₂O₃. Hydrothermal synthesis has also been studied [56, 57] for the manufacture of ZnGa₂O₄ powders. Li, *et al.* [56] have been the first to study the hydrothermal formation of zinc gallate powders by keeping GaCl₃ solutions and elemental Zn powders (in excess of the stoichiometric amount) in an autoclave at 150-170°C for 10 h, followed by HCl washing of the formed precipitates. Hirano, *et al.* [57], on the other hand, recently repeated the hydrothermal method (without even citing the work of Li, *et al.* [56] by using Zn- and Ga-sulphates as the starting materials, and they studied the influence of autoclave temperature and reaction time on the phase purity of products, over the ranges of 150° to 240°C and 48 to 100 h (under constant stirring), respectively. Beauger, *et al.* [58] have recently studied, by using thermogravimetry, the synthesis of pure and Mn-doped ZnGa₂O₄ ceramics by starting with a mixture of the nitrates of all the elements involved. However, they reported that the zinc gallate spinel phase was formed only at temperatures above 350°C.

It was therefore an object of the present invention to provide an economical and robust method of producing ceramic powders, e.g. ZnGa₂O₄ ceramic phosphor powders, and to eliminate the need for the use of hydrothermal synthesis procedures to be performed at temperatures higher than 200°C, at high pressures, and for prolonged aging times over the range of 72 to 100 hours. It was a further object of the present invention to ZnGa₂O₄ provide ceramic powders having an average particle size in the nanometer range which are particularly useful in coating suspensions.

These objects have been achieved according to the invention by a method for producing ZnGa₂O₄ ceramic powders comprising the steps:
(a) preparing a precursor solution by
   (i) providing an aqueous solution of nitrates of Zn and Ga and
   (ii) adding urea and optioanlly urease to said aqueous solution of (i),
(b) subjecting said precursor solution of (a) to a temperature from 80 °C to 130 °C,
(c) separating the particles formed in (b) from the solution and
(d) optionally drying the obtained powder.

By means of the method of the invention single phase ceramics and, in particular, single phase ceramic phosphor material can be produced. To this end, according to the invention, a precursor solution is formed first, said solution being an aqueous solution of metal nitrates and urea with or without enzyme urease. The aqueous precursor solution preferably contains at least 50 vol. % water, more preferably at least 70 vol. % water and most preferred at least 90 vol. % water. Although it is preferred to use solely pure water for preparing an aqueous metal nitrate solution, water/solvent mixtures containing e.g. organic solvents, acids or bases, besides water, may be used as well. It is most preferred to use deionized, decarbonated water. The use of decarbonated, deionized water prevents the ratio of the metal ions of the metal nitrates from being changed by the formation of unsoluble metal carbonates.

In a first step in preparing the precursor solution an aqueous solution is formed which contains metal nitrates of the metals which are constituents of the ceramic oxide to be produced, i.e. an aqueous solution of Zn nitrate and Ga nitrate is provided. If doping elements are to be incorporated into the ceramic, said doping elements, too, are preferably added in the form of the metal nitrates of the aqueous solution.

The metal nitrates, i.e. Zn nitrate and Ga nitrate are preferably dissolved in the aqueous medium, e.g. by stirring or moderate heating. Subsequently, urea with or without enzyme urease is added to said aqueous solution containing the metal cations of the ceramic. Homogeneous decomposition of urea (H₂N-CO-NH₂) for the hydrolysis of cations and for the consequent synthesis of powders of ceramics from aqueous media has previously been tried and documented for various material systems [59-68]. However, the use of this technique in combination with metal nitrates and treatment of such a solution at low temperature for forming single phase powders has not been precedented.

To promote decomposition of urea preferably urease is added, a urea-cleaving enzyme, also referred to as urea amidohydrolase (EC 3.5.1.5), which cleaves urea via carbamic acid to give carbon dioxide and ammonia.

The molar ratio of urea to total amount of metal cations in the precursor solution is preferably > 10, more preferably > 20 and most preferred > 25.

The absolute concentration of metal cations in the precursor solution is preferably from 0.001 to 1 mole/l, more preferably from 0.01 to 0.1 mole/l.

The precursor solution is subsequently treated at a temperature from 80°C to 130°C. Heat tretment can be effected, for example, in a temperature-controlled oven. An important advantage of the method of the invention is that the desired ceramic material can be obtained at temperatures clearly lower than 200°C, at normal pressure and at relatively short incubation times of < 72 h. The incubation time preferably is from 24 to 48 h.

If the heat treatment is carried out at < 80°C, the desired materials can be obtained, however, it takes a very long time, e.g. 96 h or more until the desired materials are formed.

Increasing the temperature, with incubation times being similar, merely leads to larger particle sizes of the powdery material obtained being formed.

Preferably, the precursor solution is treated at a temperature from 90°C to 110°C. In said temperature range powdery materials having very small particle size, i.e. preferably < 100 nm, more preferably < 50 nm, most preferred < 30 nm and even more preferred < 20 nm, can be obtained. When producing ZnGa₂O₄ powder heat tretment from 90°C to 110°C for 24 to 48 h, for example, leads to a powder having an average particle size from 15 to 18 nm.

The precursor solution is preferably transferred to a sealable container prior to the heat treatment, e.g. in an ordinary screw-capped glass bottle. Since the method of the invention is performed without applying external pressure and at relatively low temperatures, no specific vessels are required.

The temperature is preferably kept constant during the heat treatment, e.g. at the predetermined temperature of ± 20°C, more preferably ± 10%, even more preferred ±5° and most preferred ± 1 °. Particularly favorable conditions for the formation of ZnGa₂O₄ powder, for example, are treatment at 90± 1 °C for 24 to 48 h..

During the temperature treatment the solution is preferably left to stand still, i.e. not stirred, to allow precipitation of the desired ceramic materials.

In a step following heat treatment the particles formed, especially powdery ceramic particles, are separated from the mother solution. Separation can be effected by measures known to the skilled artisan such as filtration, centrifugal filtration etc. The resulting ceramic powders can be washed, if desired, e.g. with an alcohol such as isopropanol.

The powder obtained can be directly processed or dried prior to being further employed, if desired. Drying preferably can be effected at elevated temperature, e.g. at 40 to 100°C over a predetermined period of time, e.g. overnight (i.e. 10 - 20 h).

The ceramic powders produced according to the invention consist of only one crystalline phase.

The method of the invention preferably serves to produce ZnGa₂O₄ having spinel structure. Examples of spinel-type compounds of the state of the art are MgAl₂O₄ (spinel), Cr-doped MgAl₂O₄ (red, ruby gem spinel), ZnFe₂O₄, ZnAl₂O₄, (Ni, Zn)Fe₂O₄, (Mn,Zn)Fe₂O₄, MgFe₂O₄ (magnesioferrite), MgCr₂O₄ (magnesiochromite), Li₁₊ₓMn₂₋ₓO₄, and LiₓZn_{y}Mn_{z}Fe_{w}O₄, wherein x, y, z and w are the molar amounts of the metals present which in sum in each case must correspond to the amount of oxygen present while considering the valence of each element. Examples of perovskite-type compounds of the state of the art are single-phase or doped (typically with divalent cations of alkaline earth elements as well as with divalent or trivalent cations of transition metals) LaGaO₃, LaCrO₃, LaMnO₃, LaFeO₃ and LaCoO₃. Such ceramics are typically used in solid oxide fuel cell technology as solid electrolytes and electrode material.

Besides the production of pure ZnGa₂O₄ powders, the production of ZnGa₂O₄ powders doped with metal ions, is possible according to the invention. Suitable doping materials comprise, for example, Sr, Mg, Zn, Mn, Fe, Cr, Co, Cd, Li, Cu and In. These doping elements are incorporated into the lattice instead of the actual metal atoms of the ceramic material, with the single phase structure of the materials being preserved.

According to the invention the metal ions are preferably employed in the stoichiometric ratio in which they are to be present in the desired ceramic material, with a preferred deviation of ± 10 vol.%, more preferred ± 5 vol. %, most preferred ± 1 vol.%. When using a doping element the latter is used instead of the corresponding amount of metal which it is to displace. Favorable doping amounts, expressed in terms of the ratio of doping element to displaced element, preferably are from 0.001 to 0.5, more preferably from 0.002 to 0.2.

if desired, the ZnGa₂O₄ ceramic powders obtained according to the invention can be post-treated, e.g. by calcination. Preferably, the powders are calcined isothermally at temperatures in the range of from 200°C to 1500°C, more preferably at a temperature of from ≥ 750°C to 1200°C. By said calcination any impurities contained in the materials such as carbonate ions can be further eliminated, with the amount of carbon in the materials of the invention being reduced to less than 0.05 wt.%.

It is possible according to the method of the invention to produce ZnGa₂O₄ ceramic powders and, in particular, ceramic phosphor powders having luminescent properties which have a small particle size advantageous in many applications. For example, for using ZnGa₂O₄ ceramic materials in phosphor applications a suspension is prepared to coat articles therewith. The finer the phosphor ceramic particles contained in the suspension are, the better suspension properties generally are. Conventional size reduction techniques usually allow only the production of powders having average particle sizes of > 1 *µ*m. By the method of the invention, however, ZnGa₂O₄ ceramic powders having an average particle size of ≤ 100 nm can be obtained.

A still further object of the present invention, therefore, are ZnGa₂O₄ ceramic particles obtainable by the above-described method, having an average particle size of < 100 nm. The ceramic particles preferably have an average particle size of ≤ 50 nm, more preferably ≤ 30 nm and most preferred ≤ 20 nm, with the average size of the largest dimension of the nanocrystals of the single phase ceramic material being understood as measure of the average particle size.

A preferred embodiment of the present invention relates to a chemical method to synthesize pure, nanosized and crystalline pure or Mn²⁺-doped (over the range of 0.09 to 1.4 at%) ZnGa₂O₄ phosphor powders at 80-130°C, preferably at 90°C, following a 24 to 48 h aging of clear, aqueous solutions of urea (in some cases, containing enzyme urease to catalyze the decomposition of urea), and Zn- and Ga-nitrate (or Mn-nitrate, in case of doping) simply contained in screw-capped ordinary glass bottles in a laboratory oven. Further purification can be achieved by post-synthesis calcination of the as-recovered (from the solutions) ZnGa₂O₄ powders.

Pure or Mn²⁺-doped ZnGa₂O₄ ceramic phosphor powders have been synthesized at 90°C by using urea- and optionally enzyme urease-containing Zn-, Ga-, and/or Mn-nitrate solutions of proper stoichiometry. Single-phase pure or Mn²⁺-doped ZnGa₂O₄ phosphor powders obtained had an average particle size in the range of 15 to 18 nm.

Said ZnGa₂O₄ powder preferably is a spinel-structured, crystalline zinc gallate, either pure or Mn²⁺-doped.

The present invention will be described in more detail in the Examples and Figures below with reference to the production of pure or Mn²⁺-doped ZnGa₂O₄.
FIG. 1 is a chart showing X-ray diffraction pattern of powders produced in Example 1;
FIG. 2 is a chart showing X-ray diffraction pattern of the powders produced in Example 2;
FIG. 3 is a chart showing X-ray diffraction pattern of the zinc gallate produced in Example 3;
FIG. 4 is a chart showing X-ray diffraction pattern of the zinc gallate produced in Example 4;
FIG. 5 is a field-emission scanning electron micrograph showing the particle morphology of the zinc gallate powders produced in Example 4;
FIG. 6 is a chart showing the X-ray diffraction pattern of the Mn-doped (0.086 at%) zinc gallate produced in Example 5;
FIG. 7 is a chart showing the X-ray diffraction pattern of the Mn-doped (1.43 at%) zinc gallate produced in Example 6;
FIG. 8 is a collective chart showing the X-ray diffraction patterns of calcined zinc gallate powders produced in Example 7;
FIG. 9 is a chart showing the results of thermogravimetric and differential thermal (TG/DTA) analyses performed on the zinc gallate powders produced in Example 7;
FIG. 10 is a group of field-emission scanning electron micrographs showing the change in particle morphology of the zinc gallate powders produced in Example 4, as a function of increasing calcination temperature;
FIG. 11 is a, chart showing the Fourier transform infrared spectroscopy data of the zinc gallate powders, as a function of calcination temperature, produced in Example 7.

### EXAMPLES

### 1. Starting Materials

The Zn source is zinc nitrate hexahydrate (Zn(NO₃)₂•6H₂O). As the Ga source, gallium nitrate (Ga(NO₃)₃**•**4H₂O) is used. A manganese nitrate ICP standard solution (whose concentration was 9.95 mg/mL) is used as the Mn source. Urea and enzyme urease used were of reagent-grade.

Specifically, the molar ratio of Zn/Ga was 0.50 for producing pure, undoped zinc gallate powders. Manganese doping is studied over the range of x =0.006 to 0.1 where the value of x should be conceived in the following formula: Zn₁₋ₓMnₓGa₂O₄.

### 2. Method of Production

0.3704 M Ga³⁺ and 0.7404 M Zn²⁺ stock solutions were first prepared by dissolving the required amounts of gallium- and zinc-nitrate salts in deionized, decarbonated water. The use of decarbonated, deionized water during synthesis prevents the Zn/Ga ratio from being changed by the formation of carbonates thereof. A starting cation solution is prepared by stirring an appropriate mixture of the above-mentioned stock solutions. Urea and optionally enzyme urease is then added to the cation solution, and the resultant mixture is transferred into an ordinary glass bottle. The capped bottle is finally placed into a drying oven whose temperature is kept constant at 90± 1 °C for aging times of 24 to 48 h. After completing the reaction, the reaction mixture is cooled down to room temperature, and filtered to collect the powdery product. The powdery product is washed with isopropanol and dried in a drying oven to obtain a powder of zinc gallate.

### EXAMPLE 1

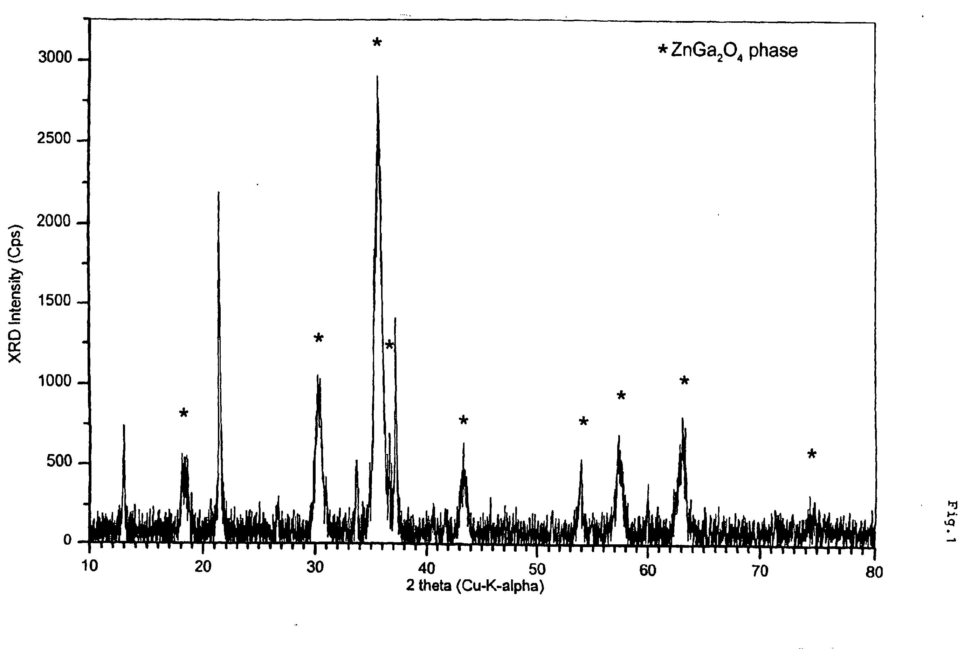

A 6.5 mL aliquot (i.e., 0.0024 mol Ga³⁺) of the gallium nitrate stock solution and 1.62 mL (i.e., 0.0012 mol Zn²⁺) portion of the zinc nitrate stock were placed into a 150 mL-capacity glass beaker, followed by the addition of 89 mL of deionized water. The solution was mixed at RT for 15 minutes, and then 2 g of urea powder was added to this solution, followed by 5 minutes of stirring at RT. The molar ratio of urea-to-cations corresponded to 9.25 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90± 1 °C. The solution in the bottle was kept in the oven at 90°C for 24 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 1. The powder consisted of a phase mixture of ZnGa₂O₄ spinel phase and GaOOH.

### EXAMPLE 2

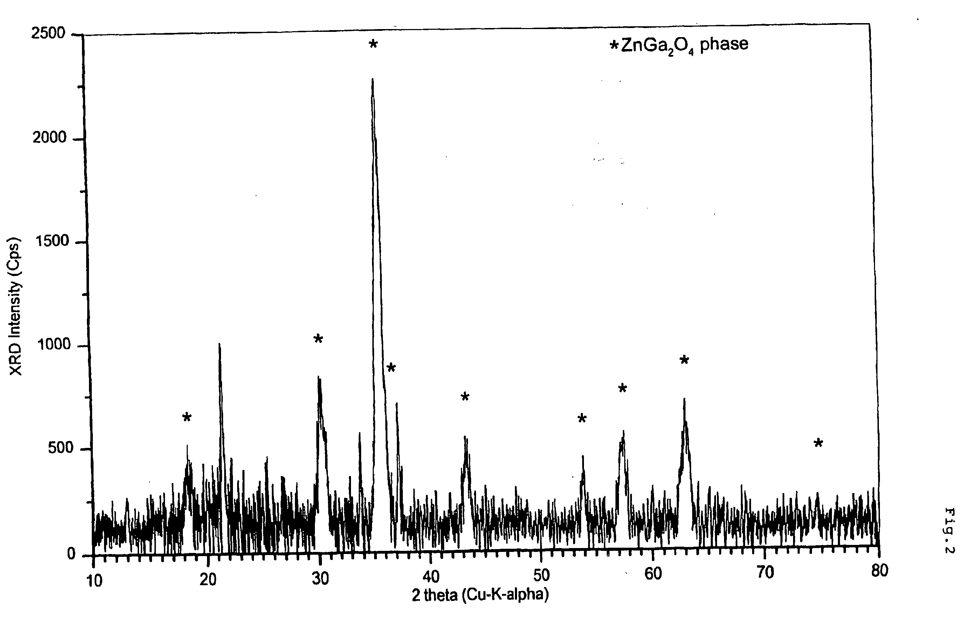

A 6.5 mL aliquot (i.e., 0.0024 mol Ga³⁺) of the gallium nitrate stock solution and 1.62 mL (i.e., 0.0012 mol Zn²⁺) portion of the zinc nitrate stock were placed into a 150 mL-capacity glass beaker, followed by the addition of 89 mL of deionized water. The solution was mixed at RT for 15 minutes, and then 2 g of urea powder was added to this solution, followed by 5 minutes of stirring at RT. The molar ratio of urea-to-cations corresponded to 9.25 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90 ± 1 ° C. The solution in the bottle was kept in the oven at 90°C for 72 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 2. The powder still consisted of a phase mixture of ZnGa₂O₄ spinel phase and a smaller amount of GaOOH.

### EXAMPLE 3

A 6.5 mL aliquot (i.e., 0.0024 mol Ga³⁺) of the gallium nitrate stock solution and 1.62 mL (i.e., 0.0012 mol Zn²⁺) portion of the zinc nitrate stock were placed into a 150 mL-capacity glass beaker, followed by the addition of 89 mL of deionized water. The solution was mixed at RT for 15 minutes, and then 5.5 g of urea powder was added to this solution, followed by 5 minutes of stirring at RT. The molar ratio of urea-to-cations corresponded to 25.44 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90± 1 °C.

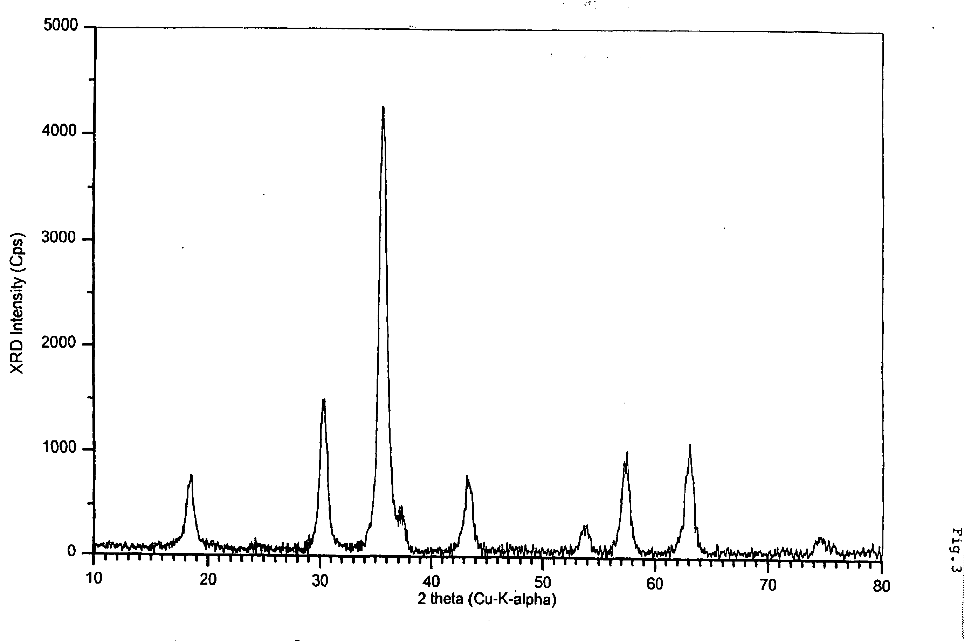

The solution in the bottle was kept in the oven at 90°C for 48 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 3. The powders were found to be single-phase ZnGa₂O₄, with a cubic spinel structure (F*d3m*) and lattice parameter of a = 8.3351 Å.

### EXAMPLE 4

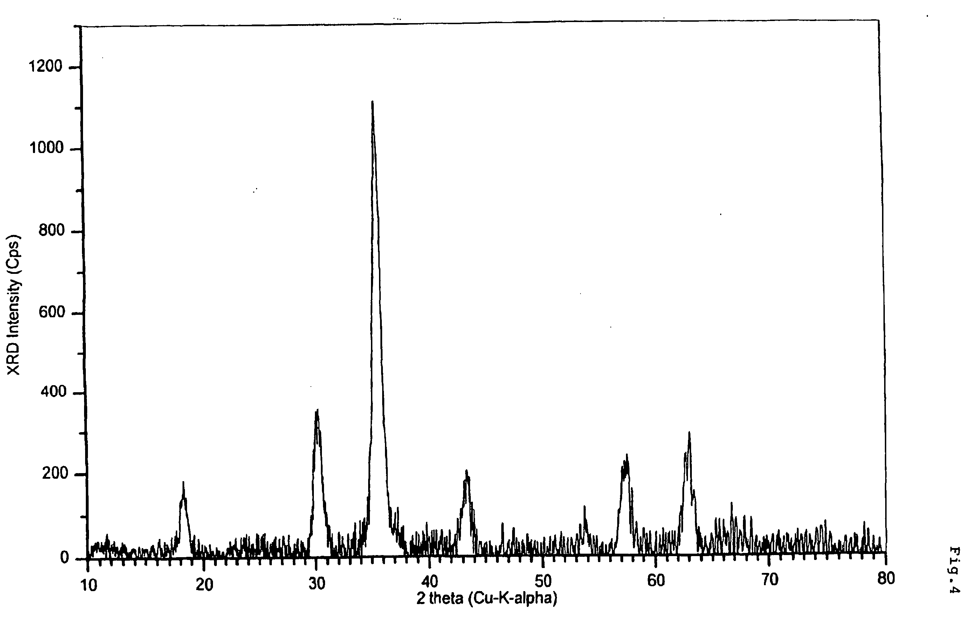

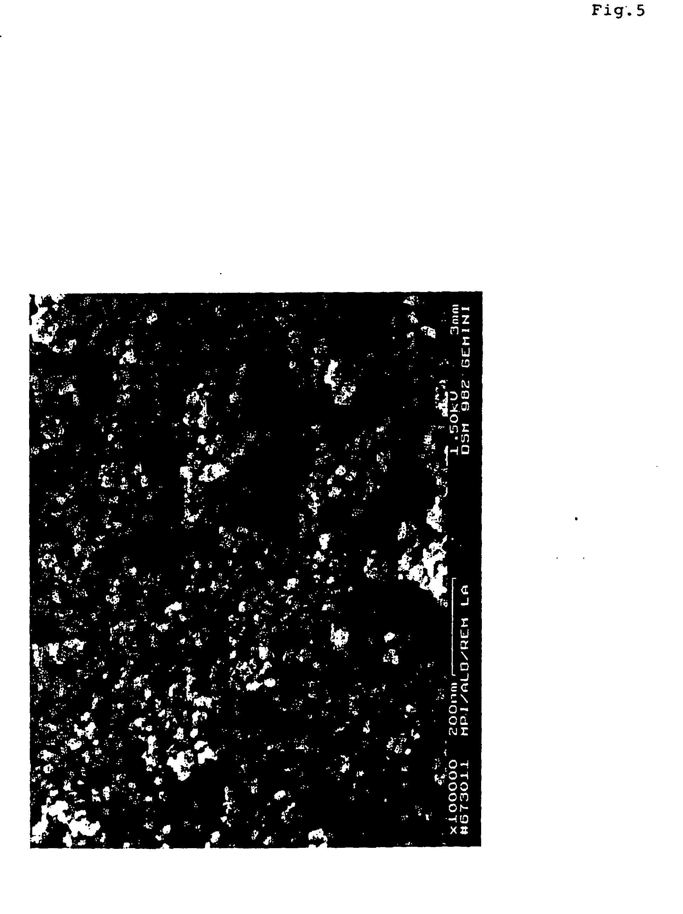

A 6.5 mL aliquot (i.e., 0.0024 mol Ga³⁺) of the gallium nitrate stock solution and 1.62 mL (i.e., 0.0012 mol Zn²⁺) portion of the zinc nitrate stock were placed into a 150 mL-capacity glass beaker, followed by the addition of 89 mL of deionized water. The solution was mixed at RT for 15 minutes, and then 5.5 g of urea and 0.05 g enzyme urease were added to this solution, followed by 15 minutes of stirring at RT. The molar ratio of urea-to-cations corresponded to 25.44 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90± 1°C. The solution in the bottle was kept in the oven at 90°C for 24 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 4. The powders were found to be single-phase ZnGa₂O₄. FIG. 5 shows a typical field-emission scanning electron microscope photomicrograph of these powders, and the average particle size in the said powders was found to be in the range of 1 5 to 18 nm.

### EXAMPLE 5

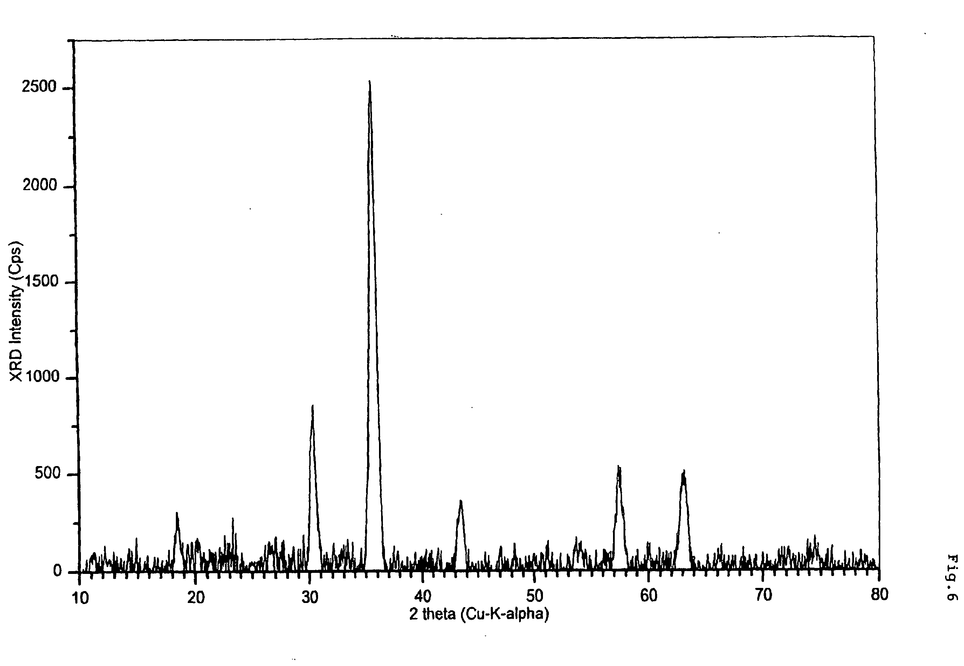

A 6.5 mL aliquot (i.e., 0.0024 mol Ga³⁺) of the gallium nitrate stock solution, 1.61 mL (i.e., 0.00119 mol Zn²⁺) portion of the zinc nitrate stock, and 0.04 mL of Mn stock solution were placed into a 150 mL-capacity glass beaker, followed by the addition of 89 mL of deionized water. The solution was mixed at RT for 15 minutes, and then 5.5 g of urea was added to this solution, followed by 10 minutes of stirring at RT. The molar ratio of urea-to-cations corresponded to 25.44 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90 ± 1°C. The solution in the bottle was kept in the oven at 90°C for 48 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 6. The powders were found to be single-phase ZnGa₂O₄ spinel with the lattice parameter a = 8.3349 Å. Inductively-coupled plasma atomic emission spectroscopy (ICP-AES) analyses on the said powders produced the following molar ratios of elements: Mn/Zn = 0.006 and Mn/Ga = 0.003.

### EXAMPLE 6

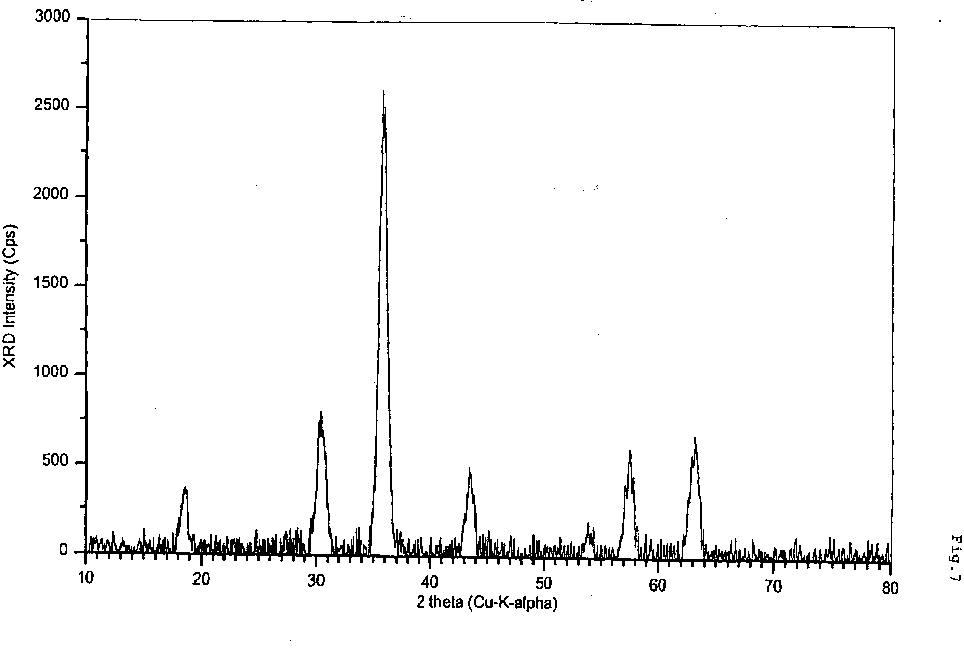

A 6.5 mL aliquot (i.e., 0.0024 mol Ga³⁺) of the gallium nitrate stock solution, 1.46 mL (i.e., 0.00108 mol Zn²⁺) portion of the zinc nitrate stock, and 0.66 mL of Mn stock solution were placed into a 150 mL-capacity glass beaker, followed by the addition of 88 mL of de-ionized water. The solution was mixed at RT for 15 minutes, and then 5.5 g of urea was added to this solution, followed by 10 minutes of stirring at RT. The molar ratio of urea-to-cations corresponded to 25.44 in this case. Following the rapid dissolution of urea powder in the solution, the liquid mixture was immediately transferred into a screw-capped (plastic), ordinary glass bottle of 100 mL-capacity, and then placed into a microprocessor-controlled laboratory oven at 90±1°C. The solution in the bottle was kept in the oven at 90°C for 48 h. Formed powders were finally separated from their mother liquors by centrifugal filtration (@5000 rpm), followed by washing three times with reagent-grade iso-propanol. Washed powders were dried in an oven at 90°C, overnight. The X-ray diffraction pattern of the dried powders is shown in FIG. 7. The powders were found to be single-phase ZnGa₂O₄ spinel with the lattice parameter a = 8.3349 Å. ICP-AES analyses on the said powders produced the following molar ratios of elements: Mn/Zn = 0.110 and Mn/Ga = 0.050.

### EXAMPLE 7

A powder of zinc gallate was produced in the same manner as in Example 3. The dried (at 90°C) powders were first finely ground by hand in an agate mortar/pestle, and then isothermally calcined, as loose powder compacts in alumina boats, in a stagnant air atmosphere at temperatures in the range of 250° to 1200°C. Each calcination batch was heated to the specified temperature at the rate of 5°C/min, soaked at this temperature for 6 h, and then cooled back to room temperature at the same rate.

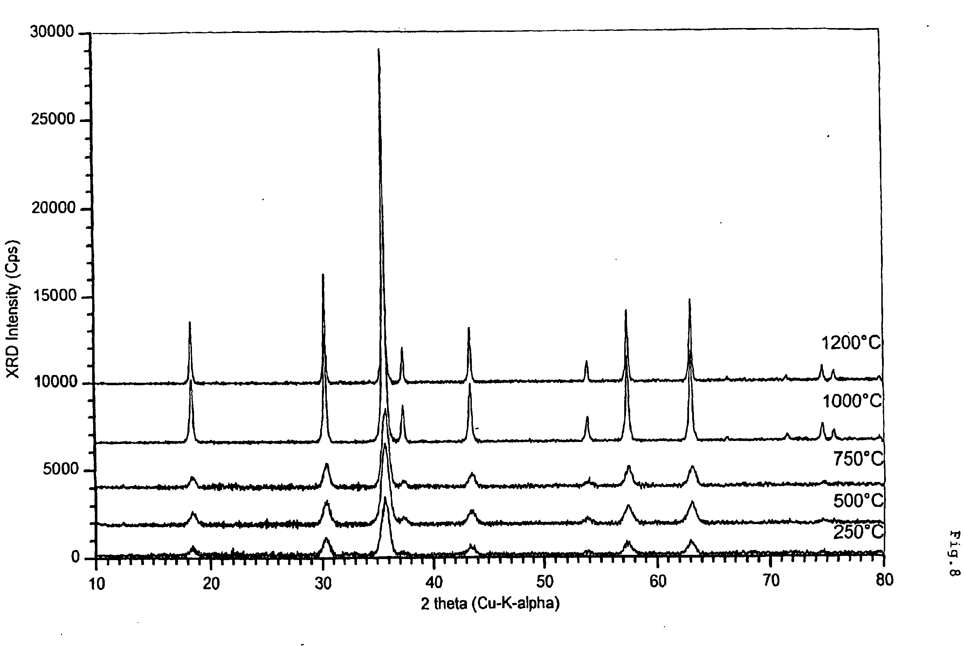

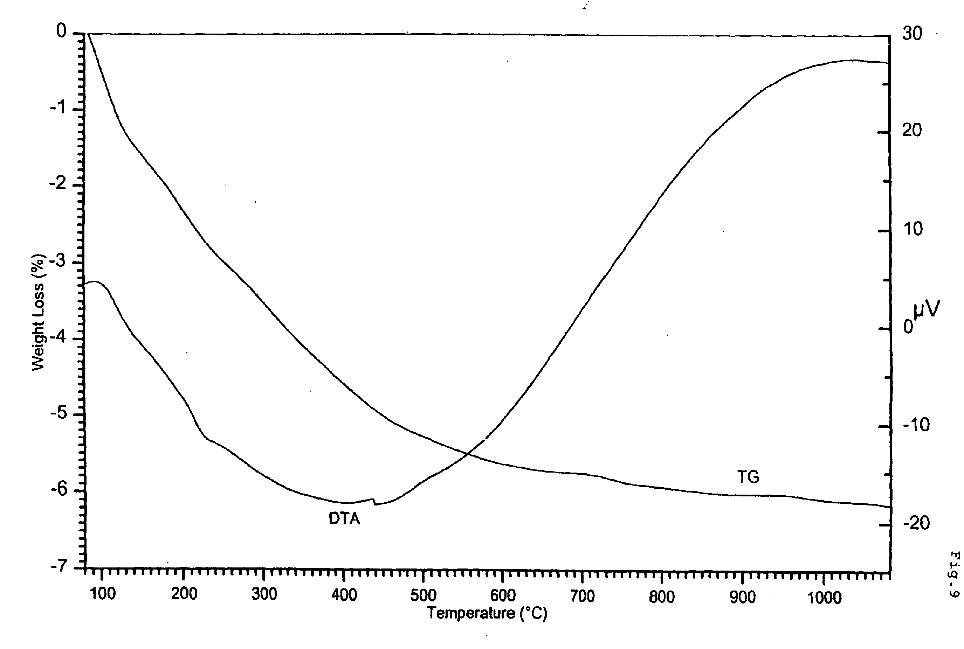

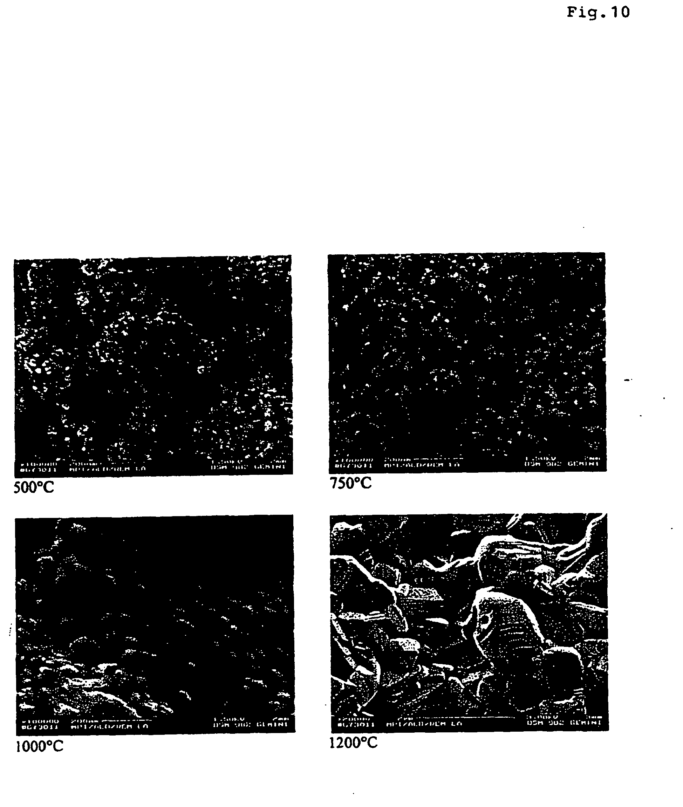

X-ray diffraction patterns of the calcined zinc gallate powders are shown in FIG. 8. Increasing the calcination temperatures to above 750°C caused a significant increase in the crystallinity of the powders. Thermogravimetric and differential thermal (TG/DTA) analyses performed on the produced (as is) zinc gallate powders are given in FIG. 9. Scanning electron micrographs given in FIG. 10 show the variation in the morphology of the zinc gallate powders as a function of calcination temperature.

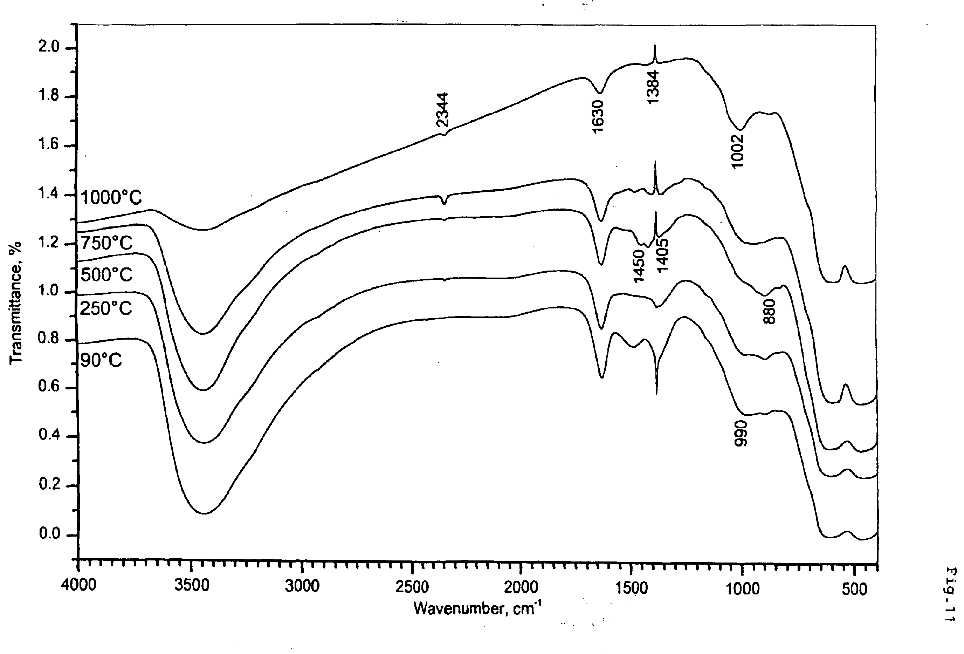

Fourier transform infrared spectroscopy data of the zinc gallate powders, as a function of calcination temperature, are also given in FIG. 11. The IR bands, seen in samples calcined at 750°C, in the interval of 1450-1405 cm⁻¹ (including those in the range of 880 to 800 cm⁻¹) indicated the presence of structural CO₃²⁻ ions. Nitrate ions were not detected in these samples, in accordance with the results of elemental N analyses. However, the presence of carbonate ions in the powders, which obviously resulted from the use of urea during aqueous synthesis, has also been confirmed by the elemental carbon analyses: samples dried at 90°C had 0.530±0.020% . C, whereas for the samples calcined at 1000°C the same figure dropped to 0.015 ±0.010%.

### REFERENCES

1. C. N. King, "Electroluminescent Displays," *J. Vac. Sci. Technol.,* **A14,** 1729-1735 (1996).
2. S. Itoh, H. Toki, Y. Sato, K. Morimoto, and T. Kishino, "The ZnGa₂O₄ Phosphor for Low-Voltage Blue Cathodoluminescence," *J. Electrochem. Soc.,* **138,** 1509-1512 (1991).
3. S.-H. Yang and M. Yokoyama, "Improvement of Cathodoluminescence for ZnGa₂O₄ Phosphor by Second Fired Process," *Jpn. J. Appl. Phys.,* **36,** 5145-5150 (1997).
4. T. Minami, Y. Kuroi, T. Miyata, H. Yamada, and S. Takata, "ZnGa₂O₄ as Host Material for Multicolor-Emitting Phosphor Layer of Electroluminescent Devices," *J. Luminescence,* **72-74,** 997-998 (1997).
5. T. Minami, Y. Kuroi, and S. Takata, "Preparation of ZnGa₂O₄:Mn Phosphor Thin Films as Emitting Layers for Electroluminescent Devices," *J. Vac. Sci. Technol*., **A14,** 1736-1740 (1996).
6. S. K. Sampath and J. F. Cordaro, "Optical Properties of Zinc Aluminate, Zinc Gallate, and Zinc Aluminogallate Spinels," *J. Am. Ceram. Soc.,* **81**, 649-654 (1998).
7. I.-K. Jeong, H. L. Park, and S.-I. Mho, "Two Self-Activated Optical Centers of Blue Emission in Zinc Gallate," *Sol. State Comm.,* **105,** 179-183 (1998).
8. T. Omata, N. Ueda, K. Ueda, and H. Kawazoe, "New Ultraviolet-Transparent Electroconductive Oxide, ZnGa₂O₄ Spinel," *Appl. Phys. Lett.,* **64**, 1077-1078 (1994).
9. Z. Yan, H. Takei, and H. Kawazoe, "Electrical Conductivity in Transparent ZnGa₂O₄: Reduction and Surface-Layer Structure Transformation," *J. Am. Ceram. Soc.,* **81,** 180-186 (1998).
10. H. Kawazoe and K. Ueda, "Transparent Conducting Oxides Based on the Spinel Structure," *J. Am. Ceram. Soc*., **82,** 3330-3336 (1999).
11. S. K. Sampath, D. G. Kanhere, and R. Pandey, "Electronic Structure of Spinel Oxides: Zinc Aluminate and Zinc Gallate," *J. Phys.: Condens. Matter,* **11,** 3635-3644 (1999).
12. M. M. Sinha, N. P. Singh, K. Prasad, and H. C. Gupta, "Effect of Rattling on the Interatomic Interaction in Oxide Spinels MgAl₂O₄ and ZnGa₂O₄," *Phys. Stat. Sol.,* **190,** K27-K29 (1995).
13. N. Kimizuka, M. Isobe, and M. Nakamura, "Syntheses and Single-Crystal Data of Homologous Compounds, In₂O₃(ZnO)_{*m*} (*m* = 3, 4, and 5), InGaO₃ (ZnO)₃, and Ga₂O₃(ZnO)_{*m*} (*m* = 7, 8, 9, and 16) in the In₂O₃-ZnGa₂O₄-ZnO System," *J. Sol. State Chem.,* **116,** 170-178 (1995).
14. R. Pandey, J. D. Gale, S. K. Sampath, and J. M. Recio, "Atomistic Simulation Study of Spinel Oxides: Zinc Aluminate and Zinc Gallate," *J. Am. Ceram. Soc.,* **82,** 3337-3341 (1999).
15. P. J. M. Van Der Straten and R. Metselaar, "Flux Growth of ZnGa₂O₄ Single Crystals," *J. Cryst. Growth,* **43,** 270-272 (1978).
16. Z. Yan and H. Takei, "Flux Growth of Single Crystals of Spinel ZnGa₂O₄ and CdGa₂O₄," *J. Cryst. Growth,* **171,** 131-135 (1997).
17. G. R. Patzke, S. Locmelis, R. Wartchow, and M. Binnewies, "Chemical Transport Phenomena in the ZnO-Ga₂O₃ System," *J. Cryst. Growth,* **203,** 141-148 (1999).
18. E. Nowak, G. Kühn, T. Morgenstern, and B. Schumann, "Rapid Thermal Diffusion of Zinc in GaAs," *Cryst. Res. Technol.,* **26,** 981-986 (1991).
19. Z. Yan, M. Koike, and H. Takei, "Preparation of Spinel ZnGa₂O₄ Films on MgO Substrates by the Solvent Evaporation Epitaxy Method," *J. Cryst. Growth,* **165,** 183-186 (1996).
20. I. J. Hsieh, M. S. Feng, K. T. Kuo, and P. Lin, "Growth of ZnGa₂O₄ Phosphor by Radio Frequency Magnetron Sputtering," *J. Electrochem. Soc. ,* **141**, 1617-1621 (1994).
21. I. J. Hsieh, K. T. Chu, C. F. Yu, and M. S. Feng, "Cathodoluminescent Characteristics of ZnGa₂O₄ Phosphor Grown by Radio Frequency Magnetron Sputtering,"' *J. Appl. Phys.,* **76,** 3735-3739 (1994).
22. C. F. Yu and P. Lin, "Luminescent Characteristics of ZnGa₂O₄:Mn Phosphor Thin Films Grown by Radio-Frequency Magnetron Sputtering," *Jpn. J. Appl. Phys.,* **35,** 5726-5729 (1996).
23. Y. J. Kim, Y. H. Jeong, K. D. Kim, S. G. Kang, K. G. Lee, J. I. Han, Y. K. Park, and K. I. Cho, "Growth and Luminescent Characteristics of ZnGa₂O₄ Thin Film Phosphor Prepared by Radio Frequency Magnetron Sputtering," *J. Vac. Sci. Technol.,* **B16,** 1239-1243 (1998).
24. S. K. Choi, H. S. Moon, S.-I. Mho, T. W. Kim, and H. L. Park, "Tunable Color Emission in a Zn₁₋ₓCdₓGa₂O₄ Phosphor and Solid Solubility of CdGa₂O₄ in ZnGa₂O₄," *Mat. Res. Bull.,* **33,** 693-696 (1998).
25. S. G. Kim, S. H. Lee, N. H. Park, H. L. Park, K.-W. Min, S.-I. Mho, T. W. Kim, and Y. H. Hwang, "Mn²⁺ Site Behaviors in CdₓZn₁₋ₓGa₂O₄ and SrₓBa₁₋ₓAl₁₂O₁₉ Green Phosphors," *Sol. State Comm.,* **110,** 515-518 (1999).
26. T.-M. Chen and Y.-W. Chen, "Systematic Tuning of the Luminescent Properties of Self-Activated ZnGa₂O₄ Phosphors by Cd lon Substitution," *J. Sol. State Chem.,* **150,** 204-208 (2000).
27. J. J. Krebs, G. H. Stauss, and J. B. Milstein, "EPR of Fe³⁺ and Mn²⁺ in Single-Crystal ZnGa₂O₄ Spinel," *Phys. Rev. B,* **20,** 2586-2587 (1979).
28. D. Bravo and F. J. Lopez, "Superposition Model Analysis on the Site Symmetry of Fe³⁺ lons Doping Spinel Crystals," *J. Phys.: Condens. Matter,* **4,** 10335-10340 (1992).
29. K.-S. Suh, S.-J. Jang, K.-I. Cho, S. Nahm, and J.-D. Byun, "Compositional Dependence of Luminescence of Lithium Zinc Gallate Phosphor," *J. Vac. Sci. Technol.,* **B16,** 858-861 (1998).
30. S.-H. Yang and M. Yokoyama, "The Effect of Li, Cu, and Zn Doping on the Luminance and Conductivity of Blue ZnGa₂O₄ Phosphor," *Jpn. J. Appl. Phys.,* **37,** 6429-6433 (1998).
31. T. Abritta and F. H. Blak, "Luminescence Study of ZnGa₂O₄: Co²⁺," *J. Luminescence*_{*;*} **48-49,** 558-560 (1991).
32. L. P. Sosman, T. Abritta, A. C. Pereira, and H. Vargas, "Photoacoustic Spectroscopy of Co ²⁺ in ZnGa₂O₄ and MgGa₂O₄," *Chem. Phys. Lett.,* **227,** 485-489 (1994).
33. L. P. Sosman, A. D. Tavares, and T. Abritta, "Near Infrared Spectroscopy of Divalent Cobalt in Polycrystalline Magnesium and Zinc Gallate," *J. Phys. D: Appl. Phys.,* **33,** L19-L21 (2000).
34. T. Ohtake, N. Sonoyama, and T. Sakata, "Electrochemical Luminescence of ZnGa₂O₄ Semiconductor Electrodes Activated with Cr and Co," *Chem. Phys. Lett.,* **318**, 517-521 (2000).
35. G. G. P. van Gorkom, "Doubly Excited Cr³⁺ Pairs in ZnGa₂O₄," *Phys. Rev. B,* **8,** 1827-1834 (1973).
36. J. C. M. Henning, "Direct Determination of Weak Exchange Interactions in Cr³⁺-Doped Spinel ZnGa₂O₄," *Phys. Rev. B,* **21,** 4983-4995 (1980).
37. H. G. Wai and D. J. Newman, "Extended-Path-Model Analysis of Superexchange Coupling in the Cr³⁺-doped Spinel ZnGa₂O₄," *Phys. Rev. B,* **27,** 4483-4485 (1983).
38. Z. W. Chen, "Investigation of the Anion Distortion Parameter *u* for Chromium Doped ZnGa₂O₄ Spinel," *Sol. State Comm.,* **80**, 213-215 (1991).
39. I.-K. Jeong, H. L. Park, and S.-I. Mho, "Photoluminescence of ZnGa₂O₄ Mixed with InGaZnO₄," *Sol. State Comm.,* **108,** 823-826 (1998).
40. L. E. Shea, R. K. Datta, and J. J. Brown, Jr., "Photoluminescence of Mn²⁺-Activated ZnGa₂O_{4'}" *J. Electrochem. Soc.,* **141,** 1950-1954 (1994).
41. L. E. Shea, R. K. Datta, and J. J. Brown, Jr., "Low Voltage Cathodoluminescence of Mn²⁺-Activated ZnGa₂O₄," *J. Electrochem. Soc.,* **141**, 2198-2200 (1994).
42. A. Vecht, D. W. Smith, S. S. Chadha, C. S. Gibbons, J. Koh, and D. Morton, "New Electron Excited Light Emitting Materials," *J. Vac. Sci. Technol.,* **B12,** 781-784 (1994).
43. W. Jia, H. Liu, S. Huang, X. Wu, L. Lu, and W. M. Yen, "Photoluminescence of Mn²⁺-Doped ZnGa₂O₄ Singe-Crystal Fibers," *J. Electrochem. Soc.,* **142,** 1637-1640 (1995).
44. T. K. Tran, W. Park, J. W. Tomm, B. K. Wagner, S. M. Jacobsen, C. J. Summers, P. N. Yocom, and S. K. McClelland, "Photoluminescence Properties of ZnGa₂O₄: Mn Powder Phosphors," *J. Appl. Phys.,* **78,** 5691-5695 (1995).
45. C. F. Yu and P. Lin, "Manganese-Activated Luminescence in ZnGa₂O₄," *J. Appl. Phys.,* **79**, 7191-7197 (1996).
46. K. Uheda, T. Maruyama, H. Takizawa, and T. Endo, "Synthesis and Long-period Phosphorescence of ZnGa₂O₄:Mn²⁺ Spinel," *J. Alloys and Comp.,* **262-263,** 60-64 (1997).
47. S. H. M. Poort, D. Cetin, A. Meijerink, and G. Blasse, "The Luminescence of Mn²⁺-Activated ZnGa₂O₄," *J. Electrochem. Soc.,* **144,** 2179-2183 (1997).
48. S.-S. Kim, S. H. Cho, J. S. Yoo, S. H. Jo, and J. D. Lee, "Resistivity Effect of ZnGa₂O₄:Mn Phosphor Screen on Cathodoluminescence Characteristics of Field Emission Display," J. *Vac. Sci. Technol.,* **B16,** 2086-2090 (1998).
49. C. F. Yu and P. Lin, "A. C. Powder Electroluminescence Devices using ZnGa₂O₄:Mn Phosphor," *J. Mat. Sci., Lett.,* **17,** 555-557 (1998).
50. T. Ohtake, N. Sonoyama, and T. Sakata, "Electrochemical Luminescence of ZnGa₂O₄ and ZnGa₂O₄:Mn Electrodes," *Chem. Phys. Lett.,* **298,** 395-399 (1998).
51. Y. E. Lee, D. P. Norton, and J. D. Budai, "Enhanced Photoluminescence in Epitaxial ZnGa₂O₄:Mn Thin-Film Phosphors using Pulsed-Laser. Deposition," *App. Phys. Lett.,* **74,** 3155-3157 (1999).
52. A. R. Phani, S. Santucci, S. Di Nardo, L. Lozzi, M. Passacantando, P. Picozzi, and C. Cantalini, "Preparation and Characterization of Bulk ZnGa₂O₄," *J. Mater. Sci.,* **33,** 3969-3973 (1998).
53. L. Satyanarayana, C. V. G. Reddy, S. V. Manorama, and V. J. Rao, "Liquid-Petroleum-Gas Sensor Based on a Spinel Semiconductor, ZnGa₂O₄," *Sensors and Actuators,* **B46,** 1-7 (1998).
54. H.-K. Jung, D.-S. Park, and Y. C. Park, "Preparation and Characterization of ZnGa₂O₄:Mn Phosphors by Multistage Precipitation Method," *Mat. Res. Bull.,* **34,** 43-51 (1999).
55. K.-H. Hsu and K.-S. Chen, "Photoluminescence of ZnGa₂O₄ Phosphor Prepared by a Microencapsulation Method," *Ceram. Int.,* **26,** 469-473 (2000).
56. Y. Li, X. Duan, H. Liao, and Y. Qian, "Self-Regulation Synthesis of Nanocrystalline ZnGa₂O₄ by Hydrothermal Re58action," *Chem. Mater.,* **10,** 17-18 (1998).
57. M. Hirano, M. Imai, and M. Inagaki, "Preparation of ZnGa₂O₄ Spinel Fine Particles by the Hydrothermal Method," *J. Am. Ceram. Soc.,* **83,** 977-979 (2000).
58. C. Beauger, P. Grosseau, B. Guilhot, D. Huguenin, and P. lacconi, "Synthese Basse Temperature du Gallate de Zinc," *J. Therm. Anal. Calorim.,* **59,** 827-835 (2000).
59. B. C. Cornilsen and J. E. Reed, "Homogeneous Precipitation of Basic Aluminum Salts as Precursors for Alumina," *Am. Ceram. Soc. Bull.,* **58,** 1999 (1979).
60. E. Matijevic, "Monodispersed Colloids-Art and Science," *Langmuir,* **2,** 12-20 (1986).
61. A. Celikkaya and M. Akinc, "Preparation and Mechanism of Formation of Spherical Submicrometer Zinc Sulfide Powders," *J. Am. Ceram. Soc.,* **73,** 2360-2365 (1990).
62. E Matijevic, "Preparation and Properties of Uniform Size Colloids," *Chem. Mater.,* **5,** 412-426 (1993).
63. D. J. Sordelet, M. Akinc, M. L. Panchula, Y. Han, and M. H. Han, "Synthesis of Yttrium-Aluminum-Garnet Precursor Powders by Homogeneous Precipitation," *J. Eur. Ceram. Soc.,* **14,** 123-130 (1994).
64. W. H. R. Shaw and J. J. Bordeaux, "The Decomposition of Urea in Aqueous Media," *J. Am. Chem. Soc.,* **77,** 4729-4733 (1955).
65. E. Taspinar and A. C. Tas, "Low-Temperature Chemical Synthesis of Lanthanum Monoaluminate," *J. Am. Ceram. Soc.,* **80,** 133-141 (1997).
66. E.E. Oren, E. Taspinar and A. C. Tas, "Chemical Preparation of Lead Zirconate (PbZrO₃) Powders by Homogeneous Precipitation and Calcination," *J. Am. Ceram. Soc.,* **80,** 2714-2716 (1997).
67. A. C. Tas, "Preparation of Lead Zirconate Titanate (Pb(Zr_{0.52}Ti_{0.48})O₃) by Homogeneous Precipitation and Calcination," *J. Am. Ceram. Soc.,* **82,** 1582-1584 (1999).
68. D. Bayraktar and A. C. Tas, "Biomimetic Preparation of HA Powders at 37°C in Urea- and Enzyme Urease-containing Synthetic Body Fluids," *Turkish J. Med. Sci.,* **30(3)**, 235-245 (2000).

## Claims

1. A method for producing ZnGa₂O₄ ceramic powders comprising the steps:
(a) preparing a precursor solution by
(i) providing an aqueous solution of nitrates of Zn and Ga, and
(ii) adding urea and optionally urease to said aqueous solution of (i),
(b) subjecting said precursor solution of (a) to a temperature from 80°C to 130°C,
(c) separating the particles formed in (b) from the solution and
(d) optionally drying the obtained powder.

2. The method according to claim 1,
wherein a doped ZnGa₂O₄ ceramic powder is produced, said dopant being selected from the group consisting of Sr, Mg, Zn, Cd, Fe, Li, Cu, Co, Cr, In and Mn.

3. The method according to claim 2, wherein the dopant ist Mn.

4. The method according to any of the preceding claims,
wherein the precursor solution is subjected to a temperature from 90 to 110°C in step (b).

5. The method according to any of the preceding claims,
wherein the heat treatment in step (b) is performed for 24 to 48 h.

6. The method according to any of the preceding claims,
wherein the molar ratio of urea to metal ions in the precursor solution is > 10.

7. The method according to any of the preceding claims,
wherein the precursor solution is transferred to a sealable container before the heat treatment in step (b).

8. The method according to any of the preceding claims,
wherein a powder having an average particle size from 15 to 18 nm is prepared.

9. The method according to any of the preceding claims wherein the ceramic powder has a spinel crystal structure.

10. A ceramic powder obtainable according to any of claims 1 to 9, having an average particle size of less than 100 nm.

## Patentansprüche

1. Verfahren zum Herstellen von ZnGa₂O₄-Keramikpulvern, umfassend die Schritte:
(a) Herstellen einer Vorläuferlösung durch
(i) Bereitstellen einer wässrigen Lösung von Nitraten von Zn und Ga, und
(ii) Zugeben von Harnstoff und optional Urease zu der wässrigen Lösung von (i),
(b) Aussetzen der Vorläuferlösung von (a) einer Temperatur von 80 °C bis 130 °C,
(c) Trennen der Teilchen, die in (b) gebildet werden von der Lösung und
(d) optional Trocknen des erhaltenen Pulvers.

2. Verfahren nach Anspruch 1, worin ein dotiertes ZnGa₂O₄-Keramikpulver erzeugt wird, wobei die Dotierung ausgewählt wird aus der Gruppe, bestehend aus Sr, Mg, Zn, Cd, Fe, Li, Cu, Co, Cr, In und Mn.

3. Verfahren nach Anspruch 2, worin die Dotierung Mn ist.

4. Verfahren nach einem der vorhergehenden Ansprüche, worin die Vorläuferlösung einer Temperatur von 90 bis 110 °C in Schritt (b) unterzogen wird.

5. Verfahren nach einem der vorhergehenden Ansprüche, worin die Hitzebehandlung in Schritt (b) für 24 bis 48 h durchgeführt wird.

6. Verfahren nach einem der vorhergehenden Ansprüche, worin das molare Verhältnis von Harnstoff zu Metallionen in der Vorläuferlösung > 10 ist.

7. Verfahren nach einem der vorhergehenden Ansprüche, worin die Vorläuferlösung in ein verschließbares Behältnis vor der Hitzebehandlung in Schritt (b) übergeführt wird.

8. Verfahren nach einem der vorhergehenden Ansprüche, worin ein Pulver mit einer mittleren Teilchengröße von 15 bis 18 nm hergestellt wird.

9. Verfahren nach einem der vorhergehenden Ansprüche, worin das Keramikpulver eine Spinellkristallstruktur aufweist.

10. Keramikpulver, erhältlich nach einem der Ansprüche 1 bis 9 mit einer mittleren Teilchengröße von weniger als 100 nm.

## Revendications

1. Procédé de production de poudres de céramique de ZnGa₂O₄ comprenant les étapes consistant à :
(a) préparer une solution de précurseur en
(i) fournissant une solution aqueuse de nitrates de Zn et de Ga, et
(ii) ajoutant de l'urée et éventuellement de l'uréase à ladite solution aqueuse de (i),
(b) soumettre ladite solution de précurseur de (a) à une température de 80° C à 130° C,
(c) séparer les particules formées dans (b) de la solution et
(d) sécher éventuellement la poudre obtenue.

2. Procédé selon la revendication 1,
dans lequel une poudre de céramique de ZnGa₂O₄ dopée est produite, ledit dopant étant choisi dans le groupe constitué de Sr, Mg, Zn, Cd, Fe, Li, Cu, Co, Cr, In et Mn.

3. Procédé selon la revendication 2, dans lequel le dopant est Mn.

4. Procédé selon l'une quelconque des revendications précédentes, dans lequel la solution de précurseur est soumise à une température de 90° à 110 °C dans l'étape (b).

5. Procédé selon l'une quelconque des revendications précédentes,
dans lequel le traitement thermique dans l'étape (b) est effectué pendant 24 à 48 h.

6. Procédé selon l'une quelconque des revendications précédentes, dans lequel le rapport molaire de l'urée aux ions métalliques dans la solution de précurseur est > 10.

7. Procédé selon l'une quelconque des revendications précédentes, dans lequel la solution de précurseur est transférée dans un conteneur scellable avant le traitement thermique dans l'étape (b).

8. Procédé selon l'une quelconque des revendications précédentes, dans lequel une poudre ayant une taille moyenne de particules de 15 à 18 nm est préparée.

9. Procédé selon l'une quelconque des revendications précédentes, dans lequel la poudre de céramique a une structure cristalline de spinelle.

10. Poudre de céramique pouvant être obtenue selon l'une quelconque des revendications 1 à 9, ayant une taille moyenne de particules inférieure à 100 nm.
